# EUROPEAN PATENT APPLICATION

(11) **EP 2 860 953 A1**
(43) Date of publication of application: **15.04.2015**
(21) Application number: 13004901.8
(22) Date of filing: 11.10.2013
(51) Int. Cl.: H04M 3/56, H04L 12/18, G06Q 10/10, H04L 29/06

(54) **Sharing graphical content among mobile computer devices in a communication network**

(71) Applicant: Kwame Corporation Ltd., Lincoln LN1 1XG (GB)
(72) Inventor: Landin, Guillermo Ferreira, 1250-120 Lisboa (PT)
(74) Representative: Katérle, Axel

(57) **Abstract**

A computer program product, a mobile computer device and a method for sharing graphical content in a communication network are described. The described computer program product contains program code which, when executed by a processing unit of a mobile computer device in a communication network, provides facilities for altering, based on user input at the computer device, graphical content that is displayed by a display unit of the computer device, transmitting, via a network interface of the computer device, the altered graphical content to a node in the network, receiving, via the network interface, new graphical content from the node in the network, and, upon receipt of new graphical content from the node, displaying the received content by the display unit, wherein the received and displayed content is again available for altering and transmitting to the node.

## Description

### Technical Field

The present disclosure relates generally to the field of data sharing in a network. It relates in particular to the sharing of graphical content among a plurality of mobile computer devices in a communication network.

### Background

In recent years, a growing popularity of smart phones and tablet PCs for the consumer market has caused a rapid increase in the use of internet-enabled mobile computer devices. Aside from facilities for conventional audio communication, such devices regularly include means for graphical display and thereby enable an exchange also of graphical information between different participants of a communication network. At the same time, the good portability of these devices allows a user to carry them over long parts of the day and in that way to be equipped for spontaneous communication and data transfer through the network.

However, with most of the present applications of mobile computer devices the exchange of graphical content in peer-to-peer communication is limited to stored pictures or video files or to real-time video transmission in connection with an audio communication. Furthermore, initiating a transfer of graphical content from one computer device to another often involves a series of activation, selection, dialing and confirmation steps on the side of the sender, and also the recipient has to perform similar procedures in order to access the transmitted content.

It is therefore desirable that the potential of transferring graphical content among mobile computer devices be extended and that its use will be simplified.

### Summary of the Invention

The present disclosure presents a solution for easily sharing graphical content among a plurality of mobile computer devices in a communication network.

According to a first aspect a computer program product is provided, the computer program product containing program code which, when executed by a processing unit of a mobile computer device in a communication network, provides facilities for altering, based on user input at the computer device, graphical content that is displayed by a display unit of the computer device; transmitting, via a network interface of the computer device, the altered graphical content to a node in the network; receiving, via the network interface, new graphical content from the node in the network; and, upon receipt of new graphical content from the node, displaying the received content by the display unit, wherein the received and displayed content is again available for altering and transmitting to the node.

The computer program product may comprise a mobile application, at least parts of which can be loaded by the mobile computer device through the network and stored in a data storing unit of the mobile computer device. The communication network may be, for example, the Internet and/or the node in the network may be a communication server.

Transmitting and/or receiving graphical content may be performed automatically as soon as graphical content has been altered at the computer device and/or new graphical content has become available from the network node, respectively. Alternatively, altered graphical content may also be transmitted to the node and/or received from the node at predefined time intervals and/or upon a predefined user behavior. The predefined user behavior may not itself be part of the alteration of the graphical content and may comprise actions and/or predetermined periods of inactivity.

Graphical content may include, but may not be limited to, streamed content, picture files, displayed information such as strings of characters and symbols, and any combination thereof, such as a superposition of a picture and a character string.

Received content may be stored in a data storing unit of the mobile computer device. In addition or as an alternative, the mobile computer device and/or the computer program product may have different operation modes, wherein displaying received content by the display unit is not performed in at least one operation mode of the mobile device, for example a sleeping mode, and/or of the computer program product. Content that has been received and stored may become displayed when the mobile device and/or the computer program product is no longer in the at least one operation mode in which display of received content is not performed. The computer program product may be adapted to displaying only the most recently altered or received graphical content.

The display unit of the computer device may comprise a touch-sensitive display and altering the graphical content may be performed based on user input via the touch-sensitive display.

The facilities for altering the graphical content at the computer device may comprise a drawing board function, said drawing board function enabling arbitrary modifications to displayed graphical content. The drawing board function may be operated via a touch-sensitive display of the mobile computer device.

During use of the drawing board function altered graphical content may be transmitted to the network node dynamically. Alternatively, altered graphical content may be transmitted to the node at predefined time intervals and/or upon a predefined user behavior. The predefined user behavior may not itself be part of the alteration of the graphical content and may comprise actions and/or predetermined periods of inactivity.

The facilities for altering, transmitting, receiving and displaying graphical content may be available in a locked screen mode of the mobile computer device, said locked screen mode being characterized as an operation mode of the device in which the display is active whereas access to control functions of the device by means of user input to the display is reduced.

In an active mode of the mobile computer device the facilities for displaying and altering the graphical content may be available in the form of a widget.

The graphical content may correspond to a wallpaper design used at the mobile computer device. The wallpaper may be displayed in a particular operation mode of the mobile computer device, for example in a locked screen mode or as a background of a graphical user interface in an active mode of the computer device.

The mobile computer device may be a smart phone or a tablet PC.

The computer program product may be operated on a plurality of mobile computer devices in the network and the altered graphical content that is transmitted to the node by a first computer device may correspond to the new graphical content that is received from the node and displayed by at least one other computer device.

The graphical content available from the network node may be the most recently altered and transmitted graphical content from any of the plurality of mobile computer devices. For example, the network node may store a version of graphical content for receipt by the plurality of computer devices, which stored version may become updated or replaced whenever an alteration to that version is transmitted to the node from any of the computer devices.

The computer program product may further provide a drawing board function at any of the plurality of computer devices. When the drawing board function is used for altering graphical content displayed at the first computer device, during use of the drawing board function the altered graphical content may be transmitted dynamically to the network node by the first device and synchronously received and displayed by the at least one other computer device. The altered graphical content that is synchronously received and displayed by the at least one other computer device may further be available for simultaneous altering by means of the drawing board function and for dynamically transmitting to the node by the at least one other computer device for synchronous receipt by at least the first computer device.

Alternatively, altered graphical content may also be transmitted to the node and/or received from the node by any of the plurality of computer devices at predefined time intervals and/or upon a predefined user behavior that may not itself be part of the alteration of the graphical content and may comprise actions and/or predetermined periods of inactivity. Accordingly, the transfer of altered graphical content from the network node to any of the computer devices may be initiated by the network node and/or by the receiving computer device.

The computer program product may further be adapted, if operated on a plurality of mobile computer devices, to allow for different subgroups to be defined among the plurality of computer devices. Altered and transmitted graphical content from any computer device may be received and displayed only by computer devices that belong to the same subgroup as the device at which the content has been altered and transmitted. A subgroup may be defined by mutual agreement among its assigned members and/or by external control.

According to a second aspect computer-readable storage media are provided, the storage media storing a computer program product according to the present disclosure.

According to a third aspect a mobile computer device is provided, comprising computer-readable storage media according to the present disclosure.

According to a fourth aspect a method of sharing graphical content among a plurality of mobile computer devices in a communication network is provided. The method comprises the steps of altering, based on user input, graphical content that is displayed by a display unit of a first computer device; transmitting, via a network interface of the first computer device, the altered graphical content to a node in the network; receiving, by at least one other computer device in the network, the altered graphical content from the node in the network; and, displaying the altered content by display units of the first and the at least one other computer device, wherein the graphical content which is received and displayed by the at least one other computer device is available for further altering and transmitting to the node by the at least one other computer device and wherein at any of the computer devices the facilities for altering the graphical content comprise a drawing board function, said drawing board function enabling arbitrary modifications to the displayed graphical content, and, during use of the drawing board function at any of the computer devices, altered graphical content is transmitted and/or received by any of the computer devices dynamically, at predefined time intervals or upon a predefined user behavior. The predefined user behavior may not itself be part of the alteration of the graphical content and may comprise actions and/or predetermined periods of inactivity.

### Brief Description of the Drawings

Further features and advantages of the present invention will become apparent from the following detailed description and drawings.
- Figs. 1 and 2: are schematic representations of different embodiments for transferring graphical content in a communication network according to the present invention; and
- Fig. 3: is a schematic flow chart of a method for sharing graphical content in a communication network.

### Detailed Description

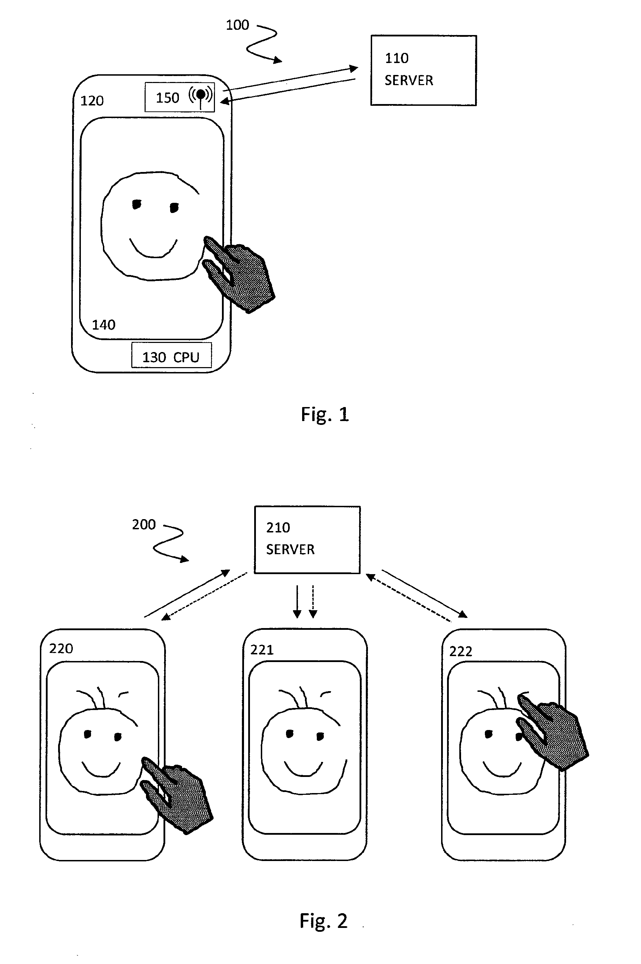

Fig. 1 shows parts of a communication network 100 comprising a network node 110 and a mobile computer device 120. The mobile computer device 120, which in the shown example may be a smartphone or a tablet PC, comprises a processor unit 130, a touch sensitive display unit 140 and a network interface 150, the network interface 150 allowing for wireless communication between the mobile computer device 120 and the network node 110. The processing unit 130 of the mobile computer device 120 is executing a computer program product according to the present disclosure.

The described computer program product is preferably configured as a mobile application that can be loaded through the network by a mobile computer device. The mobile computer device may further store at least parts of that mobile application on a data storing unit of the mobile computer device. In what follows, and without implying any limitation, the terms "computer program product" and "mobile application" will be used as synonyms.

As indicated in Fig. 1, the mobile application allows a user of the mobile computer device 120, via the touch sensitive display unit 140 and a drawing board function provided by the mobile application, to alter displayed content by direct user input. As indicated by the arrows in Fig. 1, such alterations of displayed content will be transmitted via the network interface 150 from the mobile computer device 120 to the network node 110. Conversely, graphical content can also be transmitted from the network node 110 to the mobile computer device 120, where such content is received via the network interface 150 and displayed by the display unit 140. The received content, while being displayed by the display unit 140, may again be altered by user input at the mobile device 120 and the altered graphical content can again be transmitted to the network node 110.

When a communication link between the mobile computer device 120 and the network node 110 is established, the transmission of altered graphical content from the mobile computer device 120 to the network node 110 or of new graphical content from the network node 110 to the mobile computer device 120 can be performed dynamically, as soon as new or altered graphical content is available either at the mobile computer device 120 or at the network node 110. In particular, if graphical content is altered continuously, such as in the illustrated case of a drawing being produced, alterations to the content will be continuously transmitted to the network node 110 and vice versa.

Besides the illustrated case of graphical content that is created by a drawing board or a scratch pad function, the transferred graphical contents may also comprise picture files or visual information such as edited alphanumeric characters or symbols. Moreover, the alteration of displayed content, which in the illustrated case consists in arbitrary additions to the displayed content by means of a drawing board function, may also consist in a partial or a complete replacement of the displayed content with superseding content. Superseding graphical content can be obtained or generated at the mobile computer device 120, for example, by an integrated camera or be loaded from files stored on a data storing unit of the mobile computer device 120. Superseding graphical content can further be obtained from other sources in the network 100 and/or be generated without immediate user input, for example by supplementary facilities of the mobile computer device 120, such as a clock, a GPS function, an automatic messenger function or the like.

Fig. 2 shows parts of a network 200, wherein a plurality of mobile computer devices 220, 221, 222 is connected by communication links to a network node 210. On each of the mobile computer devices 220, 221, 222 the computer program product as described in connection with Fig. 1 is being run. As in the previous example of Fig. 1, the users of the first and the third mobile computer devices 220, 222 are currently altering displayed graphical content by direct user input, via a drawing board function and a touch sensitive display. In either case the altered graphical content is transmitted dynamically to the network node 210, which is indicated by the continuous arrow that starts from the first mobile communication device 220 and by the dashed arrow starting from the third computer device 222.

In an extension to the situation of Fig. 1, however, in the case of Fig. 2 content which is received by any of the mobile computer devices 220, 221, 222 is graphical content that has been altered and transmitted to the node 210 by another one of the mobile computer devices 220, 221, 222, respectively. As indicated by the continuous straight arrows, alterations to graphical content that are made by a user of the first mobile computer device 220 will be transmitted to the network node 210, from where these alterations will be synchronously received and displayed by the other mobile computer devices 221, 222. Correspondingly, alterations made by a user of the third computer device 222 will also be transmitted to the node 210 and received and displayed by the first and the second computer devices 220, 221. Thus, while the first and the third mobile computer devices 220, 222 act simultaneously as transmitters and receivers of graphical content, the second mobile computer device 221 receives the alterations to the displayed graphical content from both the first and the third mobile computer devices 220, 222. All devices thereby share the same graphical information, while that shared graphical content that will be received by any of the devices from the network node 210 is at the same time available for alteration by any of the devices. For that purpose, the network node 210 may store a current version of the shared graphical content, which version may be updated or replaced with any altered content that the node receives from any of the devices.

As a result of the described dynamic and synchronized transfer of altered graphical contents among a plurality of mobile computer devices in a communication network 200, users of the mobile devices can easily generate and share graphical content in real-time, which enables effective communication by an exchange of graphical information.

The dynamic and synchronized transfer of graphical content is a preferred embodiment of the present invention. However, in alternative embodiments altered graphical content can also be transmitted to the node, or received from the node, by a computer device at predefined time intervals or upon a predefined user behavior. Such user behavior may not itself be part of the alteration of the graphical content, e.g. an initiation of another application, and may comprise actions as well as predetermined periods of inactivity. For example, altered contents can be transmitted to the node when the user has not made any further alterations over a period of ten seconds. This will further facilitate the use of the described application. Accordingly, in different embodiments of the invention the transfer of altered graphical content from the network node to any of the computer devices can be initiated by the network node and/or by the receiving computer device.

It is further preferred that the graphical content that is available from the network node is always the most recently altered and transmitted graphical content from any of the plurality of mobile computer devices. For that purpose, the network node may store a version of graphical content for receipt by the plurality of computer devices, which stored version may become updated or replaced whenever an alteration to that version is transmitted to the node from any of the computer devices.

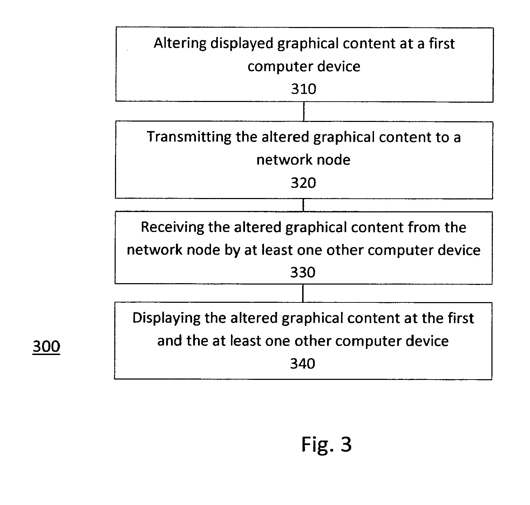

Fig. 3 is a flowchart of the method for sharing graphical content among the plurality of mobile computer devices corresponding to Fig. 2. As a first step 310, the method comprises an alteration of displayed graphical content at a first computer device. In a second step 320 that altered graphical content will be transmitted to a network node. Once the graphical content has been transmitted to the network node, it may be received from the network node by at least one other computer device, step 330. As a result of the described transfer of graphical content from the first computer device to the network node and further to at least one other device, in a final step 340 the altered graphical content will be displayed at both the first and the at least one other computer device.

It is an intention of the present disclosure to enhance the potential of transferring graphical content among participants of a communication network and to facilitate such transfer, in particular for users of mobile computer devices. The facilities of the described data sharing method provide effective means to this end, as they enable an immediate communication among a plurality of participants on the basis of shared graphical content. Furthermore, there are various ways of facilitating a user's access to the described features. The mobile application may be configured such that, when it is run on a mobile computer device and the device is in an active operational mode, the functions of the mobile application are permanently available to the user in the form of a widget on a graphical user interface of the computer device. Shared graphical content can also be displayed as wallpaper, i.e. a background design of a graphical user interface, of the mobile computer device.

Facilities of the mobile application can further be available in a locked screen mode of the computer device. The locked screen mode is defined as an operational mode of a mobile computer device with a touch-sensitive display, which mode lies in between a switched-off or sleeping mode and a fully activated mode of the device and is to be passed through in an activation procedure of the device. While in a locked screen mode display of graphical contents at the display unit is normally active, options for controlling the mobile device by input to the touch-sensitive display are substantially limited. The described mobile application could be configured such that it is operated in the locked screen mode, which mode, in effect, would thereby be replaced with the facilities provided by the mobile application. This would allow the user to have immediate access to the described features for graphical communication even from a switched-off mode of the device, while exiting the application in order to fully activate the device can be performed, for example, by a predefined user-input into the touch display. In combination with a drawing board function, the described invention thus allows, for example, an easy distribution of handwritten notes and notices among participating users, which notes could also be easily checked by the recipients.

Receipt and display of graphical content from the network node can occur in different operational modes of the mobile computer device and/or of the computer program product. For example, in modes where a facility for displaying graphical content is not available, graphical content may nevertheless be received from the network node by the mobile device. Such content may be stored in a data storing unit of the mobile device and become displayed as soon as a change of the operational mode of the device and/or of the computer program product allows.

According to the above, a potentially large number of participants of the described method will share the same graphical content. This would either compromise privacy of the communication or inhibit an application of the method on a larger scale.In a preferred embodiment the computer program product therefore allows for dividing its users into subgroups. Whenever a subgroup has been formed, preferably on the basis of mutual agreement among its assigned members but possibly also by external control, graphical content will be shared only within the subgroup while access to the contents that are shared within other subgroups will be denied.

## Claims

1. A computer program product containing program code which, when executed by a processing unit (130) of a mobile computer device (120) in a communication network (100), provides facilities for:
altering, based on user input at the computer device (120), graphical content that is displayed by a display unit (140) of the computer device (120);
transmitting, via a network interface (150) of the computer device, the altered graphical content to a node (110) in the network (100);
receiving, via the network interface (150), new graphical content from the node (110) in the network; and,
upon receipt of new graphical content from the node, displaying the received content by the display unit (140),
wherein the received and displayed content is again available for altering and transmitting to the node.

2. The computer program product of claim 1, wherein transmitting and/or receiving graphical content is performed automatically as soon as graphical content has been altered at the computer device (120) and/or new graphical content has become available from the network node (110), respectively.

3. The computer program product of claims 1 or 2, wherein the display unit (140) of the computer device (120) comprises a touch-sensitive display and wherein altering the graphical content is performed based on user input via the touch-sensitive display.

4. The computer program product of any of the preceding claims, wherein the facilities for altering the graphical content at the computer device (120) comprise a drawing board function, said drawing board function enabling arbitrary modifications to displayed graphical content, and wherein during use of the drawing board function altered graphical content is transmitted to the network node (110) dynamically.

5. The computer program product of any of the preceding claims, wherein the facilities for altering, transmitting, receiving and displaying graphical content are available in a locked screen mode of the computer device (120), said locked screen mode being **characterized** as an operation mode of the device in which the display (140) is active whereas access to control functions of the device by means of user input to the display is reduced.

6. The computer program product of any of the preceding claims, wherein in an active mode of the computer device (120) the facilities for displaying and altering the graphical content are available in the form of a widget.

7. The computer program product of any of the preceding claims, wherein the graphical content corresponds to a wallpaper design used at the computer device (120).

8. The computer program product of any of the preceding claims, wherein the mobile computer device (120) is a smart phone or a tablet PC.

9. The computer program product of any of the preceding claims, wherein the computer program product is operated on a plurality of mobile computer devices (220, 221, 222) in the network (200) and the altered graphical content that is transmitted to the node (210) by a first computer device (220) corresponds to the new graphical content that is received from the node (210) and displayed by the at least one other computer device (221, 222).

10. The computer program product of claim 9, wherein the computer program product provides a drawing board function at any of the plurality of computer devices (220, 221, 222) and, when the drawing board function is used for altering graphical content displayed at the first computer device (220), during use of the drawing board function the altered graphical content is transmitted dynamically to the network node (210) by the first device (220) and synchronously received and displayed by the at least one other computer device (221, 222).

11. The computer program product of claim 10, wherein the altered graphical content that is synchronously received and displayed by the at least one other computer device (221, 222) is available for simultaneous altering by means of the drawing board function and for dynamically transmitting to the node (210) by the at least one other computer device (222) for synchronous receipt by at least the first computer device (220, 221).

12. A computer-readable storage media storing the computer program product according to any of the claims 1 to 11.

13. A mobile computer device (120; 220, 221, 222) comprising computer-readable storage media according to claim 12.

14. A method (300) of sharing graphical content among a plurality of mobile computer devices in a communication network, the method comprising the steps:
altering (310), based on user input, graphical content that is displayed by a display unit of a first computer device;
transmitting (320), via a network interface of the first computer device, the altered graphical content to a node in the network;
receiving (330), by at least one other computer device in the network, the altered graphical content from the node in the network; and,
displaying (340) the altered content by display units of the first and the at least one other computer device,
wherein the graphical content which is received and displayed by the at least one other computer device is available for further altering and transmitting to the node by the at least one other computer device; and
wherein at any of the computer devices the facilities for altering the graphical content comprise a drawing board function, said drawing board function enabling arbitrary modifications to the displayed graphical content, and, during use of the drawing board function at any of the computer devices, altered graphical content is transmitted and/or received by any of the computer devices dynamically, at predefined time intervals and/or upon a predefined user behavior.

## Amended claims

### Amended claims in accordance with Rule 137(2) EPC.

1. A computer program product containing program code which, when executed by a processing unit (130) of a mobile computer device (120) in a communication network (100), provides facilities for:
altering, based on user input at the computer device (120), graphical content that is displayed by a display unit (140) of the computer device (120);
transmitting, via a network interface (150) of the computer device, the altered graphical content to a node (110) in the network (100);
receiving, via the network interface (150), new graphical content from the node (110) in the network; and,
upon receipt of new graphical content from the node, displaying the received content by the display unit (140),
wherein the received and displayed content is again available for altering and transmitting to the node,
**characterized in that**:
the facilities for altering, transmitting, receiving and displaying graphical content are available in a locked screen mode of the computer device (120), said locked screen mode being **characterized** as an operation mode of the device in which the display (140) is active whereas access to control functions of the device by means of user input to the display is reduced.

2. The computer program product of claim 1, wherein transmitting and/or receiving graphical content is performed automatically as soon as graphical content has been altered at the computer device (120) and/or new graphical content has become available from the network node (110), respectively.

3. The computer program product of claims 1 or 2, wherein the display unit (140) of the computer device (120) comprises a touch-sensitive display and wherein altering the graphical content is performed based on user input via the touch-sensitive display.

4. The computer program product of any of the preceding claims, wherein the facilities for altering the graphical content at the computer device (120) comprise a drawing board function, said drawing board function enabling arbitrary creation of and/or modifications to displayed graphical content.

5. The computer program product of any of the preceding claims, wherein altered graphical content is transmitted to the network node (110) dynamically, at predefined time intervals and/or upon a predefined user behavior.

6. The computer program product of any of the preceding claims, wherein in an active mode of the computer device (120) the facilities for displaying and altering the graphical content are available in the form of a widget.

7. The computer program product of any of the preceding claims, wherein the graphical content corresponds to a wallpaper design used at the computer device (120).

8. The computer program product of any of the preceding claims, wherein the mobile computer device (120) is a smart phone or a tablet PC.

9. The computer program product of any of the preceding claims, wherein the computer program product is operated on a plurality of mobile computer devices (220, 221, 222) in the network (200) and the altered graphical content that is transmitted to the node (210) by a first computer device (220) corresponds to the new graphical content that is received from the node (210) and displayed by the at least one other computer device (221, 222).

10. The computer program product of claim 9, wherein the computer program product provides a drawing board function at any of the plurality of computer devices (220, 221, 222) and, when the drawing board function is used for altering graphical content displayed at the first computer device (220), during use of the drawing board function the altered graphical content is transmitted dynamically to the network node (210) by the first device (220) and synchronously received and displayed by the at least one other computer device (221, 222).

11. The computer program product of claim 10, wherein the altered graphical content that is synchronously received and displayed by the at least one other computer device (221, 222) is available for simultaneous altering by means of the drawing board function and for dynamically transmitting to the node (210) by the at least one other computer device (222) for synchronous receipt by at least the first computer device (220, 221).

12. A computer-readable storage media storing the computer program product according to any of the claims 1 to 11.

13. A mobile computer device (120; 220, 221, 222) comprising computer-readable storage media according to claim 12.

14. A method (300) of sharing graphical content among a plurality of mobile computer devices in a communication network, the method comprising the steps:
altering (310), based on user input, graphical content that is displayed by a display unit of a first computer device;
transmitting (320), via a network interface of the first computer device, the altered graphical content to a node in the network;
receiving (330), by at least one other computer device in the network, the altered graphical content from the node in the network; and,
displaying (340) the altered content by display units of the first and the at least one other computer device,
wherein the graphical content which is received and displayed by the at least one other computer device is available for further altering and transmitting to the node by the at least one other computer device,
**characterized in that**: at any of the computer devices facilities for altering, transmitting, receiving and displaying graphical content are available in a locked screen mode of the computer device, said locked screen mode being **characterized** as an operation mode of the device in which the display is active whereas access to control functions of the device by means of user input to the display is reduced.
